**Europäisches Patentamt**

**European Patent Office**

**Office européen des brevets**

(19)

(11) Numéro de publication: **0 123 583**
**A1**

(12) # DEMANDE DE BREVET EUROPEEN

(21) Numéro de dépôt: **84400576.9**

(22) Date de dépôt: **21.03.84**

(51) Int. Cl.³: **H 04 N 9/40**

(30) Priorité: **24.03.83 FR 8304869**

(43) Date de publication de la demande:
**31.10.84 Bulletin 84/44**

(84) Etats contractants désignés:
**AT BE CH DE GB IT LI LU NL SE**

(71) Demandeur: **S.A. DEMIA**
**3 boulevard Pasteur**
**Luxembourg(LU)**

(84) Etats contractants désignés:
**BE CH DE GB IT LI NL SE AT**

(71) Demandeur: **SODECOM**
**15 bis rue de Marignan**
**F-75008 Paris(FR)**

(84) Etats contractants désignés:
**LU**

(72) Inventeur: **Mikrut, Antoine**
**37 rue Reuilly**
**F-75012 Paris(FR)**

(74) Mandataire: **Beauchamps, Georges et al,**
**Cabinet Z.Weinstein 20, avenue de Friedland**
**F-75008 Paris(FR)**

(54) Système de traitement de signaux de télévision en couleur, notamment du type SECAM.

(57) La présente invention concerne un système de traitement de signaux de télévision en couleur, notamment du type SECAM.

Selon l'invention, on prévoit un circuit de traitement (70) pour la conversion du mode de transmission parallèle en mode de transmission séquentielle des signaux de sous-porteuse de chrominance (DR et DB) de manière à faire alterna-tivement passer en sortie du circuit de conversion (70) le signal vidéo (DR) pendant la durée d'une ligne, puis le signal vidéo (DB) pendant la durée de la ligne suivante.

La présente invention trouve application notamment pour des récepteurs de télévision en couleur du type SECAM classique.

FIG.3

EP 0 123 583 A1

-1-

Système de traitement de signaux de télévision en couleur, notamment du type SECAM.

La présente invention se rapporte à un système de traitement de signaux de télévision en couleur, notamment du type SECAM, issus d'un dispositif émetteur, en vue de leur application à un dispositif récepteur tel qu'un récepteur de télévision en couleur, moniteur de contrôle ou analogue, du type SECAM classique.

Il est bien connu que les systèmes classiques destinés au traitement des signaux de chrominance et de luminance, du type SECAM, sont fondés sur l'utilisation de deux sous-porteuses de couleur respectivement de 4,406 et 4,25 MHz qui transmettent alternativement les signaux de chrominance $D_R$ d'une ligne et les signaux de chrominance $D_B$ de la ligne suivante. Les sous-porteuses sont modulées en fréquence. A cette fin, les signaux de chrominance sont appliqués à un étage modulateur, au moyen d'un commutateur électronique. Avant d'être mélangés aux signaux de luminance et de synchronisation, les signaux de chrominance sont appliqués à un filtre limiteur de bande, réduisant le bruit de fond, du type à courbe anti-cloche. Puis les signaux sont transmis au dispositif récepteur, par exemple à l'aide d'un câble.

Le dispositif récepteur comprend un décodeur nécessairement équipé de filtres en cloche, d'une bifurcation entre une voie retardée d'une durée de ligne et une voie directe, et d'un commutateur piloté par une bascule synchronisée par les signaux de synchronisation de ligne pour aiguiller les informations de chrominance reçues sur une voie de sous-porteuse de l'information $D_R$ et une voie de sous-porteuse de l'information $D_B$.

Ces systèmes connus ont cependant un certain nombre d'inconvénients. Ainsi, on constate un manque de définition de couleurs provenant du fait que la bande passante de transmission des informations de chrominance est de l'ordre de 300 kHz, donc très faible, ce qui est très insuffisant pour une définition de couleurs convenable et ne permet pas la transmission d'un ou de plusieurs mots binaires codés par exemple selon le mode "N.R.Z." (non retour à zéro). D'autre part, dans ces systèmes connus les signaux de chrominance sont soumis à un nombre d'opérations relativement important, ce qui provoque chaque fois une perte d'information.

En vue de résoudre les problèmes ci-dessus, un système de traitement des signaux de chrominance et de luminance issus par exemple d'une caméra de télévision en couleur a déjà été proposé.

Un tel système de traitement comporte des moyens générateurs des sous-porteuses de chrominance et de la porteuse de luminance constitués par trois oscillateurs dont au moins les oscillateurs générateurs des sous-porteuses de chrominance sont adaptés pour produire des fréquences représentant un multiple des fréquences de sous-porteuses de chrominance classiques du système SECAM, pour élargir la largeur de la bande de transmission d'informations et pour permettre également la transmission de mots binaires, les oscillateurs étant synchronisés sur un même signal d'horloge de haute fréquence. On dispose ainsi à des bornes de sortie du dispositif de traitement d'un signal de porteuse modulée en fréquence par le signal de luminance $E'_Y$ et de sous-porteuses modulées en fréquence par les signaux de différence de couleur $D_R$ et $D_B$ (appelés couramment signaux de sous-porteuses de chrominance) et susceptibles d'être transmis parallèlement sur des voies correspondantes vers un dispositif récepteur.

Cependant, il n'est pas possible de transmettre simultanément les signaux vidéo disponibles en sortie du dispositif émetteur, notamment les signaux de sous-porteuses de chrominance $D_R$ et $D_B$ vers le dispositif récepteur du type SECAM classique. En effet, un tel dispositif récepteur est conçu pour recevoir un signal vidéo composite contenant l'information de luminance $E'_Y$, le signal de différence de couleur $D_R$ ou $D_B$, transmis séquentiellement, et modulé en fréquence, et les impulsions de synchronisation de ligne et de trame contenant les signaux d'identification de couleur.

La présente invention a pour but de résoudre le problème ci-dessus en proposant un circuit de conversion du mode de transmission simultanée en mode de transmission séquentielle des signaux vidéo vers le dispositif récepteur.

Pour cela, la présente invention concerne un système de traitement de signaux de télévision en couleur, notamment du type SECAM, comprenant un dispositif émetteur relié en sortie d'un dispositif de prise de vue tel qu'une caméra de télévision en couleur, et transmettant parallèlement à des bornes de sortie correspondantes un signal de porteuse modulée en fréquence par le signal de luminance $E'_Y$ et des sous-porteuses modulées en fréquence par les signaux de différence de couleur $D_R$ et $D_B$ ; et un dispositif récepteur tel qu'un récepteur de télévision couleur, moniteur de contrôle ou analogue du type SECAM classique, recevant du dispositif émetteur un signal vidéo composite pour la visualisation d'images couleurs ; caractérisé en ce qu'il comprend un circuit relié entre le dispositif émetteur et le dispositif récepteur pour la conversion, à la fréquence de ligne du mode de transmission parallèle en mode de transmission séquentielle des signaux de sous-porteuses de chrominance $D_R$ et $D_B$, de manière à faire ainsi alternativement passer en sortie du circuit de conversion le vidéo-signal $D_R$ pendant la durée d'une ligne, puis le vidéo-signal $D_B$ pendant la durée de la ligne suivante, la sortie du circuit de conversion étant reliée à un mélangeur recevant le signal de luminance et également les signaux de synchronisation pour former le signal vidéo composite.

Selon une caractéristique de l'invention, le circuit de conversion comprend deux voies de traitement, l'une pour le traitement du signal de sous-porteuse de chrominance $D_R$, l'autre pour le traitement du signal de sous-porteuse de chrominance $D_B$, chacune des voies de traitement comprenant un élément de commutation actionné par un organe de commande à la fréquence de ligne, les sorties communes des deux éléments de commutation étant reliées au mélangeur.

Selon une autre caractéristique avantageuse de l'invention, l'organe de commande est une bascule dont l'entrée reçoit les signaux de synchronisation de ligne et dont la sortie directe est reliée à l'entrée de commande de l'un des éléments de commutation tandis que la sortie complémentée de cette bascule est reliée à l'entrée de commande de l'autre élément de commutation.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

- La figure 1 est un schéma-bloc du dispositif émetteur traitant les signaux de chrominance et de luminance issus par exemple d'une caméra de télévision couleur ;

- la figure 2 montre les signaux traités dans ce dispositif émetteur ainsi que le signal de synchronisation de ligne ;

- la figure 3 est un schéma-bloc du dispositif de conversion selon l'invention ;

- la figure 4 représente les signaux émis à certains points du circuit de la figure 3 ; et

- les figures 5 et 6 représentent respectivement une unité de multiplexage et un circuit de matriçage des différents signaux disponibles en sortie du dispositif émetteur.

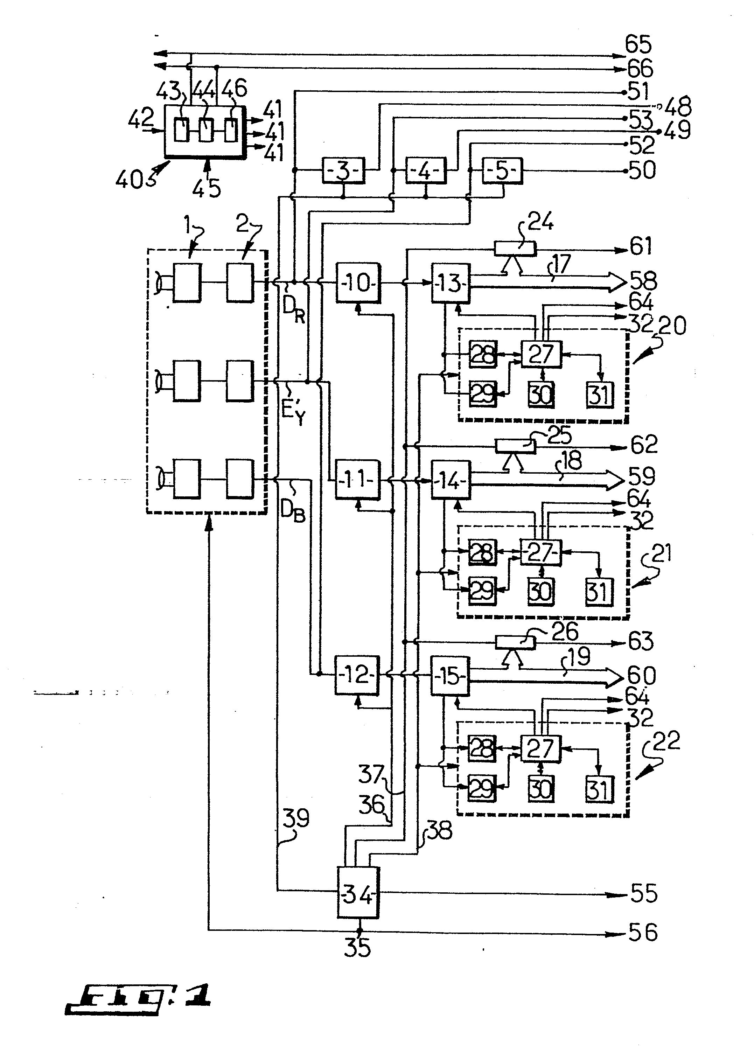

La figure 1 représente un mode de réalisation d'un dispositif de traitement de signaux de chrominance et de luminance issus par exemple d'un dispositif de prise de vue tel qu'une caméra de télévision en couleur, l'ensemble du dispositif de traitement et du dispositif de prise de vue étant par la suite appelé dispositif émetteur.

Dans le schéma représenté, on reconnaît en 1 le dispositif de prise de vue tel qu'une caméra de télévision en couleur et en 2 le dispositif des trois matrices destiné à produire à leur sortie les signaux de chrominance, c'est-à-dire de différence de couleur $D_R = E'_R - E'_Y$, $D_B = E'_B - E'_Y$ et le signal de luminance $E'_Y$ du type SECAM.

Le dispositif émetteur comporte trois oscillateurs 3, 4 et 5 avantageusement à quartz, qui sont contrôlés en tension. Les oscillateurs 3 et 5 sont destinés à produire respectivement des fréquences sous-porteuses pour les signaux de chrominance $D_R$ et $D_B$, tandis que l'oscillateur 4 engendre la porteuse du signal de luminance. Les oscillateurs 3 et 5 sont adaptés pour produire des sous-porteuses ayant des fréquences égales à un multiple des sous-porteuses classiques de 4,406 et 4,25 MHz du système SECAM. Le rapport des sous-porteuses engendrées par les oscillateurs 3 et 5 est identique au rapport des sous-porteuses classiques susmentionnées, pour assurer la compatibilité du système selon l'invention avec les systèmes classiques. Bien entendu, les sous-porteuses sont modulées en fréquence par les signaux $D_R$ et $D_B$.

Par l'utilisation de sous-porteuses de chrominance ou de couleur ayant une fréquence multiple par rapport aux sous-porteuses classiques, la bande passante de transmission de données est suffisamment large pour assurer une bonne définition des couleurs et pour permettre la transmission d'un ou de plusieurs mots binaires codés par exemple selon le mode "N.R.Z." (non retour à zéro), connu en soi et appliqué par exemple au système télétexte ANTIOPE. De plus, le traitement ultérieur à appliquer aux sous-porteuses modulées en fréquence se limite à des opérations de division de fréquence, ce qui ne provoque qu'une perte d'information simple, mais assure une stabilité multiple, comme il sera expliqué ultérieurement.

Le dispositif émetteur représenté comprend en outre trois convertisseurs analogiques-numériques 10, 11, 12 chacun étant destiné au traitement d'un des trois signaux $D_R$, $D_B$ et $E'_Y$. Chaque convertisseur est directement relié à la sortie d'une des trois matrices de la caméra de télévision. En aval de chaque convertisseur 10 à 12 on constate la présence d'un circuit d'aiguillage respectivement 13, 14 et 15 reliant le convertisseur auquel il est associé à un bus de données de sortie 17, 18 et 19 soit directement soit par l'intermédiaire d'un dispositif d'élimination de parasites 20, 21 ou 22. Etant donné que sur chaque bus les signaux numériques en code binaire produits par le convertisseur analogique-numérique 10, 11 ou 12 correspondant sont présents suivant une constellation en parallèle, on prévoit pour chacun des bus de données un convertisseur parallèle - série 24, 25 ou 26 destiné à convertir la constellation en parallèle en une constellation de signaux en série.

Chacun des dispositifs d'élimination de parasites 20, 21 et 22 comprend une unité de traitement 27 telle qu'un micro-ordinateur ou microprocesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numérique -analogique 31 à partir d'un chiffre binaire préalablement défini. Cette tension continue peut servir de tension de référence pour le système d'alimentation des différents éléments du dispositif de traitement proposé par l'invention et notamment pour la production de l'alimentation des oscillateurs 3, 4 et 5, à la manière qui sera décrite plus loin. La borne de sortie de cette tension est appliquée en 32.

Le dispositif d'élimination de parasites peut également être pourvu de moyens connus en soi permettant la correction d'erreurs contenues dans les signaux numériques portant sur plusieurs éléments binaires par exemple en assurant la présence d'un nombre prédéterminé d'états binaires dans chaque signal numérique. Le dispositif de traitement 27 permet l'accomplissement de cette fonction connue en soi. L'unité de traitement peut encore être adaptée pour produire un signal indicateur d'absence d'erreur dans les signaux numériques.

Pour assurer un parfait synchronisme du fonctionnement des différents éléments du dispositif émetteur, celui-ci comprend un oscillateur à quartz 34 constituant un générateur de signaux de haute fréquence, par exemple de l'ordre de 100 MHz. Cet oscillateur accomplit la fonction d'une horloge générale. Comme le montre la figure 1, les signaux de synchronisation de ligne et de trame et de demi-ligne disponibles en 35 sont dérivés de l'horloge générale. Les convertisseurs analogique -numérique 13 à 15, les convertisseurs parallèle-série 24 à 26 et les dispositifs d'élimination de parasites 20 à 22 sont également asservis à l'horloge. Les conducteurs des signaux d'horloge pour la commande de ces éléments sont indiqués respectivement en 36, 37 et 38. En 39, l'horloge générale 34 fournit les signaux de synchronisation des oscillateurs de sous-porteuse et de porteuse 3, 4, 5. Le synchronisme de ces oscillateurs est ainsi garanti par le fait que les signaux de synchronisation sont dérivés du même signal de haute fréquence. Il est à souligner que tous les signaux de synchronisation et de référence sont obtenus par division de la fréquence du signal d'horloge, ce qui garantit une stabilité parfaite des signaux ainsi obtenus et un synchronisme parfait de fréquence et de phase des oscillateurs 3, 4 et 5 et des signaux, c'est-à-dire de leur front avant, et ainsi de toutes les opérations effectuées par le système de traitement selon la présente invention. Pour assurer la stabilité de la fréquence de l'oscillateur d'horloge 34, par exemple pour empêcher toute dérivation thermique, cet oscillateur est monté dans une boucle de stabilisation (non représentée) comportant également les oscillateurs 3, 4 et 5.

Le dispositif d'alimentation en tension continue, désigné par le chiffre de référence 40 peut être conçu pour produire des tensions d'alimentation extrêmement stables pour les oscillateurs de sous-porteuse et de porteuse 3, 4 et 5. Ces tensions sont disponibles aux trois bornes de sortie 41 du dispositif d'alimentation. Comme cela est schématiquement indiqué sur la figure 1, les moyens générateurs des tensions d'alimentation des oscillateurs sont avantageusement dérivés du signal d'horloge de haute fréquence produit par l'horloge générale 34. Le dispositif d'alimentation 40 reçoit en 42 ce signal d'horloge de par exemple 100 MHz. Dans le dispositif 40 ce signal est divisé par un diviseur de fréquence schématiquement indiqué en 43 qui en produit un signal de par exemple 1 MHz. Celui-ci est appliqué à un amplificateur saturé 44 fonctionnant en régime de tout ou rien et alimenté de son côté en 45 par la tension continue très stable produite en 32 par l'un des dispositifs d'élimination de parasites 20, 21 ou 22. Un convertisseur 46 transforme le signal de sortie de l'amplificateur en une tension continue disponible aux sorties 41. Cette tension est parfaitement stable du fait qu'elle est dérivée de la fréquence horloge par division de fréquence, ce qui garantit déjà un haut degré de stabilité, et de la tension très stable produite par les dispositifs d'élimination de parasites à partir d'un chiffre binaire. L'amplitude de la tension de sortie est ainsi rigoureusement contrôlable.

Il est encore à noter que le dispositif d'alimentation 40 est galvaniquement séparé du secteur par l'intermédiaire d'un transformateur (non représenté).

En se reportant à la figure 1, on constate que le dispositif émetteur comporte aux bornes de sorties 48 à 50, des signaux de sortie des oscillateurs 3, 4 et 5, c'est-à-dire des sous-porteuses modulées par les signaux de chrominance et de la porteuse modulée par le signal de luminance. Des bornes de sortie 51, 52 et 53 sont prévues auxquelles peuvent être prélevés les signaux de chrominance et de luminance tels qu'ils ont été produits par la caméra de télévision en couleur. Le système comporte en outre des bornes de sortie 55, 56 auxquelles le signal d'horloge haute fréquence, produit par l'oscillateur 34 et les signaux de synchronisation de ligne et de trame et de demi-ligne peuvent être prélevés. Les symboles de référence 58 à 60 indiquent les bornes de sortie des bus de données 17 à 19 tandis qu'aux bornes 61 à 63 sont disponibles les signaux numériques en constellation en série. Le signal d'absence d'erreur est présent à la sortie 64. Les bornes 65 et 66 sont associées au dispositif d'alimentation 40 et désignent la masse et le potentiel d'alimentation.

Toutes les sorties susmentionnées ou au moins une partie essentielle de celles-ci peuvent être reliées à une prise du genre multibroche connectable à un dispositif récepteur tel que par exemple appareil de télévision en couleur standard, moniteur pour contrôle visuel ou analogues. En prévoyant également une prise par exemple du type multibroche au côté entrée, on constitue une unité autonome susceptible d'être montée entre une caméra de télévision en couleur et un dispositif récepteur approprié. Mais il serait également possible d'insérer ce dispositif avec la caméra et le dispositif récepteur tel qu'un magnétoscope dans une même boîte pour former un genre de télécinéma, un ensemble de copies de film ou de documents quelconques.

Le fonctionnement du dispositif émetteur ressort immédiatement de la description qui vient d'être faite et de la figure 1.Il n'est donc pas nécessaire de le décrire, à l'exception du fonctionnement des dispositifs d'élimination des parasites. Chacun de ces dispositifs fonctionne de la manière suivante :

Pour éliminer les parasites, l'unité de traitement 27, sous la commande de la routine stockée dans la mémoire morte 30 compare chaque trame à la trame précédente. Ces trames sont stockées respectivement dans les mémoires vives 28, 29. A la suite de cette opération de comparaison, tous les éléments d'image qui sont communs aux deux trames seront conservés. Par contre, les éléments non identiques seront éliminés. Il est à noter que les deux trames sont décalées dans le temps de 20 millisecondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour général, c'est-à-dire les éléments d'image qui le représentent conservent sensiblement leurs formes. Il ont seulement changé de place sur les deux trames. Cette non-altération de la forme générale des éléments d'image et représentative d'un objet en déplacement, d'une trame à la trame suivante, permet de la distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

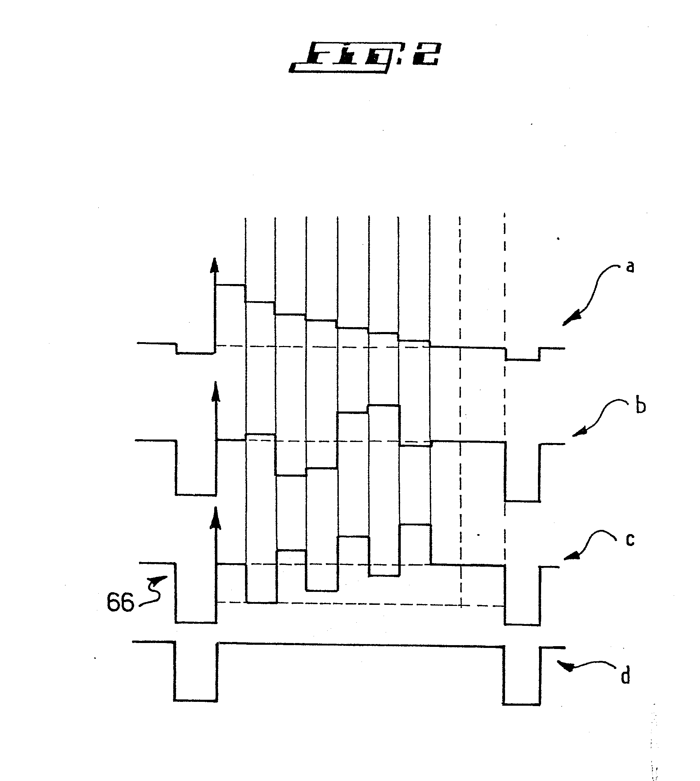

La figure 2 représente un oscillogramme d'une ligne
correspondant à la mire de barres de 75 % de l'amplitude  (blanc à 100 %). En a, b et c on montre respectivement le signal de luminance et les signaux de chrominance par les couleurs (de gauche à droite) blanc,
jaune, bleu-vert, vert, mauve, rouge, bleu noir. On
constate que chaque signal est précédé d'un top de
synchronisation 66 qui présente un niveau plus faible
que la valeur minimum du signal. Ceci signifie que les
tops de synchronisation peuvent être identifiés avec
certitude, ce qui contribue également à un parfait
synchronisme. En d est représenté à titre illustratif
le signal de synchronisation de ligne dont les tops
de synchronisation correspondent à ceux précités.

Bien entendu le dispositif tel qu'il est représenté sur
la figure 1 et tel qu'il vient d'être décrit peut être
modifié de diverses manières . Ainsi les signaux de chrominance et de luminance n'ont pas besoin d'être pris à
la sortie de la caméra. Ils peuvent être issus de tout
autre dispositif émetteur. On pourrait également envisager d'appliquer aux oscillateurs générateurs des
sous-porteuses 3 et 5 non pas les signaux de chrominance
dans leur version analogique, mais dans leur forme
numérique obtenue aux sorties des convertisseurs
analogiques-numériques 10 à 13 et le cas échéant après
le traitement par les dispositifs d'élimination de
parasites. On obtiendrait de cette manière des signaux
de sortie débarrassés de parasites aléatoires. Il est
encore une fois à souligner que le choix des fréquences
de sous-porteuse devrait être fait de telle manière que
toutes les informations et signaux dérivés puissent
être transmis et traités de façon qu'ils présentent une
haute définition et soient conservés dans l'état d'origine sans subir pratiquement aucune détérioration. Le système pourrait permettre la transmission des signaux
numériques de tout code approprié, par exemple des
signaux du type "N.R.Z." (non retour à zéro), tels que
les signaux appliqués pour le système ANTIOPE.

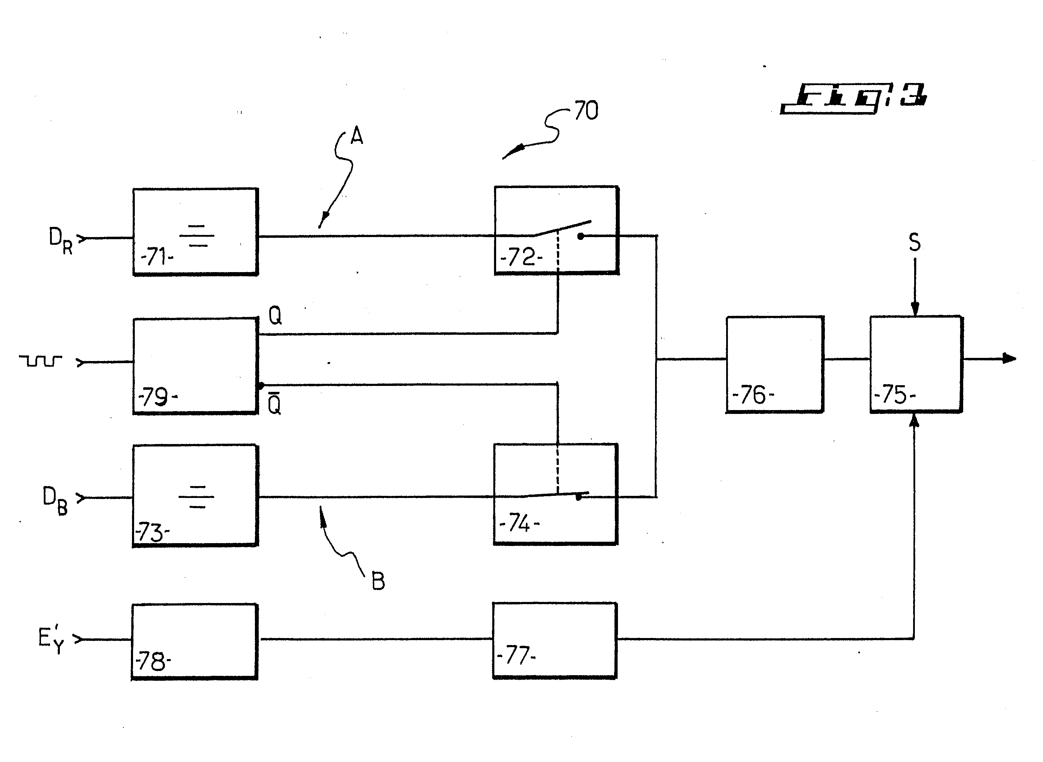

La figure 3 représente un mode de réalisation sous forme
de schéma-bloc d'un circuit de conversion des signaux
vidéo disponibles aux bornes de sortie 48, 49 et 50 du
dispositif émetteur pour leur transmission de façon
compatible vers un dispositif récepteur (non représenté)
du type SECAM classique tel qu'un récepteur de télévision en couleur ou analogue.

Un tel circuit 70 comprend une première voie de traitement A du signal de sous-porteuse de chrominance $D_R$
disponible à la sortie 48 du dispositif émetteur et
constitué par la mise en série d'un diviseur 71 recevant
le signal de sous-porteuse de chrominance $D_R$ et d'un
élément de commutation 72 tel que par exemple un commutateur analogique. Le circuit 70 comprend également une
deuxième voie de traitement B du signal de sous-porteuse
de chrominance $D_B$ disponible à la sortie 50 du dispositif émetteur et constitué, de façon identique à la
première voie, par la mise en série d'un diviseur 73
recevant le signal de sous-porteuse de chrominance $D_B$
et d'un élément de commutation 74 tel que par exemple
un commutateur analogique.

Les sorties des éléments de commutation 72 et 74 sont
reliées en commun à un circuit mélangeur 75 par l'intermédiaire d'un circuit anti-cloche 76 ou de mise en
forme de la sous-porteuse qui lui est appliquée pour
assurer éventuellement une protection supplémentaire
contre le bruit. Le circuit mélangeur 75 permet d'élaborer le vidéo-signal composite et on lui transmet pour
cela le signal de luminance démodulé par un discriminateur 77 dont l'entrée est reliée à la sortie d'une ligne à retard 78 nécessaire pour assurer dans le mélangeur sa coïncidence correcte dans le temps avec les signaux de différence de couleur, la ligne à retard 78 recevant à son entrée l'information de luminance disponible à la borne de sortie 49 du dispositif émetteur ; le mélange séquentiel à la demi-fréquence de ligne des sous-porteuses modulées respectivement par les signaux de différence de couleur $D_R$ et $D_B$, y compris les signaux d'identification ; et le train de signaux de synchronisation S de lignes et de trames et de demi-ligne disponibles à la borne de sortie 56 du dispositif émetteur. Le signal vidéo composite ainsi obtenu peut alors être envoyé par voie aérienne de façon connue en soi vers le dispositif récepteur ou par l'intermédiaire d'un câble de liaison du dispositif émetteur au dispositif récepteur.

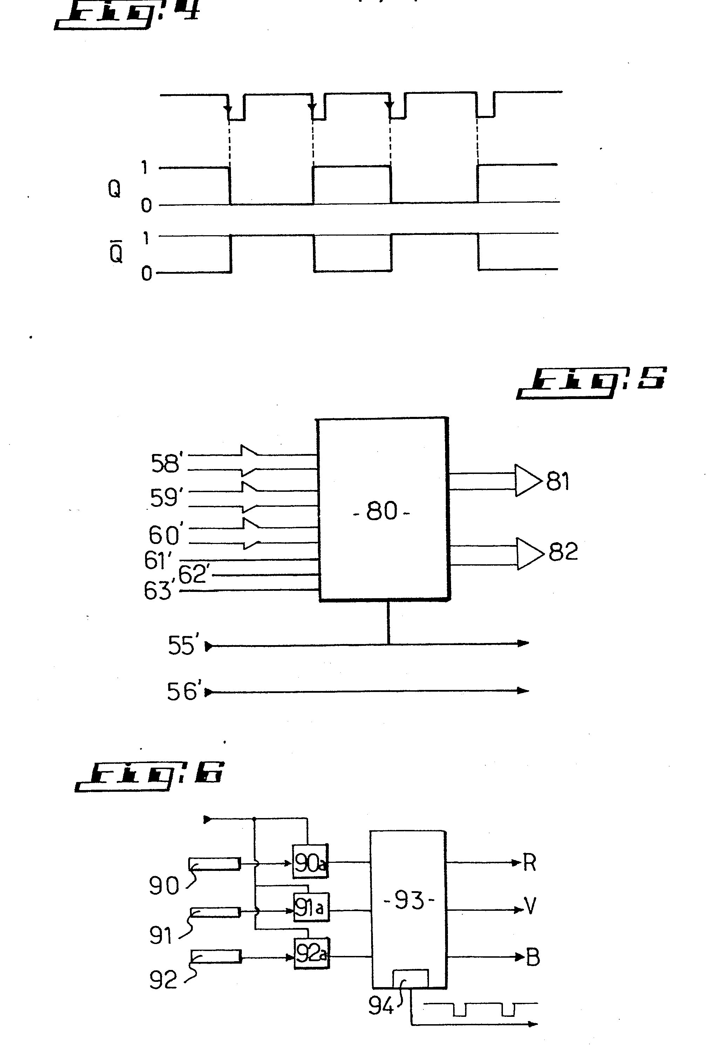

Afin de permettre la transmission séquentielle des signaux vidéo $D_R$ et $D_B$ disponibles en parallèle aux bornes de sortie 48 et 50 du dispositif émetteur un organe de commande 79 tel que par exemple une bascule du type J-K effectue le basculement à la fréquence de ligne des éléments de commutation 72 et 74 de chacune des voies A et B. La sortie Q de la bascule 79 est reliée à l'entrée de commande de l'élément de commutation 72 tandis que la sortie complémentée $\overline{Q}$ est reliée à l'entrée de commande de l'élément de commutation 74. L'entrée horloge de la bascule 79 reçoit les signaux de synchronisation de ligne issus du dispositif émetteur et dont le front descendant avant effectue, à la fréquence de ligne, un changement d'état aux sorties Q et $\overline{Q}$ de la bascule comme représenté à la figure 4. On comprend donc que les éléments de commutation 72 et 74 basculent à la fréquence de ligne et transmettent alternativement vers le mélangeur le signal vidéo $D_R$ pendant la durée d'une ligne (état fermé de l'interrupteur du commutateur 72), puis le signal vidéo $D_B$ pendant la durée de la ligne suivante (état fermé de l'interrupteur du commutateur 74 alors que celui du commutateur 72 est ouvert), et ainsi de suite.

Le circuit de conversion selon la présente invention permet donc d'assurer efficacement la transmission du mode simultané en mode séquentiel des signaux vidéo disponibles en sortie du dispositif émetteur et ce sans perte d'information.

Il est par ailleurs à noter que les tops de synchronisation 66 représentés en figure 2 peuvent facilement être obtenus par un organe formant porte ET situé dans chacun des canaux de chrominance et de luminance et détectant l'apparition du top de synchronisation du signal de synchronisation de ligne pour laisser ensuite passer les signaux de chrominance et de luminance.

La figure 5 représente un schéma-bloc d'une unité de multiplexage destinée à recevoir, d'une part, à ses entrées 58', 59' et 60', les signaux numériques en code binaire disponibles sur chaque bus aux bornes de sortie 58, 59 et 60 du dispositif émetteur suivant une constellation en parallèle, et, d'autre part, à ses bornes d'entrée 61', 62' et 63', les signaux numériques en code binaire apparaissant suivant une constellation de signaux en série aux bus des bornes de sortie 61, 62 et 63 du dispositif émetteur. L'unité de multiplexage 80 est asservie par le signal d'horloge haute fréquence disponible à la borne de sortie 55 du dispositif émetteur et appliqué à la borne correspondante 55'. Les signaux de synchronisation de ligne, de trame et de demi-ligne disponibles à la borne de sortie 56 du dispositif émetteur seront également transmis à travers la ligne montrée en figure 5 à la borne d'entrée 56'. Cette unité de multiplexage 80 permet en fait de multiplexer les signaux présents aux entrées 58' à 60' et 61' à 63' respectivement aux bornes de sortie 81 et 82 de manière à les appliquer vers un dispositif récepteur tel qu'un récepteur de télévision en couleur numérique.

La figure 6 concerne un mode de transmission des signaux de chrominance et de luminance apparaissant à la sortie du dispositif de prise de vue (caméra) et disponibles aux bornes de sortie 51, 53 et 52 du dispositif émetteur par l'intermédiaire de fibres optiques 90, 91 et 92 dont seules les parties extrêmes côté réception ont été représentées. De telles fibres optiques permettent la transmission, sans perte d'information, de ces signaux de chrominance et de luminance. En 90a, 91a et 92a sont représentés les photo-éléments récepteurs de ces fibres optiques et qui sont alimentés par un dispositif d'alimentation en tension continue du même type que celui référencé en 40 en figure 1. Il va de soi que les photo-éléments émetteurs situés en amont des fibres optiques sont également alimentés par un dispositif d'alimentation en tension continue qui peut être le dispositif d'alimentation 40 du dispositif émetteur. Les signaux vidéo apparaissant aux sorties des photo - éléments récepteurs 90a à 92a sont appliqués aux entrées d'une matrice 93 destinée à élaborer les signaux de couleur du rouge, du vert et du bleu destinés à être visualisés. A cette unité de matriçage peut être associé un séparateur relié par exemple à la borne de sortie 56 du dispositif émetteur et destiné à régénérer le signal de synchronisation trame et ligne ce séparateur étant référencé en 94 et étant d'une configuration connue en soi.

On comprend qu'à l'aide du circuit représenté en figure 6, il est possible de conserver la haute définition des signaux disponibles directement en sortie de la caméra et d'obtenir une image subséquente de haute qualité.

Il est par ailleurs à noter que les diviseurs de fréquence (71) et (73) utilisés en figure 3 ont un facteur de division correspondant au facteur de multiplication par lequel sont multipliées les fréquences de sous-porteuses de chrominance classiques comme expliqué précédemment.

Revendications.

1. Système de traitement de signaux de télévision en couleur, notamment du type SECAM, comprenant un dispositif émetteur relié en sortie d'un dispositif de prise de vue tel qu'une caméra de télévision en couleur, et transmettant parallèlement à des bornes de sortie correspondantes un signal de porteuse modulée en fréquence par le signal de luminance ($E'_Y$) et des sous-porteuses modulées en fréquence par les signaux de différence de couleur ($D_R$ et $D_B$) ; et un dispositif récepteur tel qu'un récepteur de télévision en couleur, moniteur de contrôle ou analogue, du type SECAM classique, recevant du dispositif émetteur un signal vidéo composite pour la visualisation d'images couleurs ; caractérisé en ce qu'il comprend un circuit (70) relié entre le dispositif émetteur et le dispositif récepteur pour la conversion, à la fréquence de ligne, du mode de transmission parallèle en mode de transmission séquentielle des signaux de sous-porteuses de chrominance ($D_R$ et $D_B$), de manière à faire ainsi alternativement passer en sortie du circuit de conversion le vidéo-signal $D_R$ pendant la durée d'une ligne, puis le vidéo-signal $D_B$ pendant la durée d'une ligne suivante, la sortie du circuit de conversion étant reliée à un circuit mélangeur (75) recevant le signal de luminance et également les signaux de synchronisation pour former le signal vidéo composite.

2. Système selon la revendication 1, caractérisé en ce que le circuit de conversion (70) précité comprend deux voies (A et B), l'une (A) pour le traitement du signal de sous-porteuse de chrominance ($D_R$), l'autre (B) pour le traitement du signal de sous-porteuse de chrominance ($D_B$), chacune des voies de traitement comprenant un élément de commutation (72 ; 74) actionné par un organe de commande (79) à la fréquence de ligne, les sorties communes des deux éléments de commutation étant reliées au circuit mélangeur (75) précité.

3. Système selon la revendication 2, caractérisé en ce que l'organe de commande (79) précité est une bascule dont l'entrée reçoit les signaux de synchronisation de ligne, et dont la sortie directe (Q) est reliée à l'entrée de commande de l'un des éléments de commutation (72) tandis que la sortie complémentée ($\overline{Q}$) est reliée à l'entrée de commande de l'autre élément de commutation (74).

4. Système selon la revendication 3, caractérisé en ce que la bascule (79) précitée est une bascule du type J-K.

5. Système selon l'une des revendications précédentes, caractérisé en ce que chacune des voies de traitement (A et B) précitées comprend en série avec chaque élément de commutation (72 ; 74) un diviseur de fréquence (71 ; 73) recevant le signal de sous-porteuse de chrominance correspondant dont la fréquence de sous-porteuse est égale à un multiple de la fréquence de sous-porteuse classique.

6. Système selon l'une des revendications précédentes, caractérisé en ce que les deux éléments de commutation (72 et 74) précités sont des commutateurs analogiques.

7. Système selon l'une des revendications précédentes, caractérisé en ce que le signal de luminance en sortie du dispositif émetteur précité est appliqué au circuit mélangeur (75) précité par l'intermédiaire d'un circuit série comprenant une ligne à retard (78) et un discriminateur (77).

8. Système selon l'une des revendications précédentes, caractérisé en ce qu'un circuit anti-cloche (76) est connecté entre la sortie du circuit de conversion (70) et le circuit mélangeur (75).

9. Système selon la revendication 1, caractérisé en ce que le dispositif émetteur comprend également des bornes de sortie (51, 53, 52) pour la transmission parallèle des signaux de différence de couleur ($D_R$, $D_B$) et du signal de luminance ($E'_Y$), ces signaux étant transmis à un circuit de matriçage (93) dans le dispositif récepteur en vue de la reconstitution des signaux de chrominance du rouge, du vert et du bleu par l'intermédiaire de fibres optiques (90, 91, 92).

10. Système selon la revendication 9, caractérisé en ce que l'élément photo-émetteur de chacune des fibres optiques est alimenté par le dispositif d'alimentation en tension continue 40 du dispositif émetteur tandis que le photo-élément récepteur (90a ; 91a ; 92a) de chacune de ces fibres est alimenté par un autre dispositif d'alimentation en tension continue identique au dispositif (40).

11. Système selon la revendication 9 ou 10, caractérisé en ce qu'au circuit de matriçage (93) est associé un séparateur recevant les signaux de synchronisation et fournissant le signal de synchronisation de trame.

12. Système selon la revendication 1, caractérisé en ce qu'il comprend une unité de multiplexage (80) dont les entrées (58', 59', 60') sont respectivement reliées à trois bus de données du dispositif émetteur sur chacun desquels sont produits respectivement des signaux numériques suivant une constellation en parallèle représentatifs du signal de chrominance ($D_R$, $D_B$) et du signal de luminance ($E'_Y$), et dont trois autres entrées (61', 62', 63') sont reliées respectivement à trois bus de données du dispositif émetteur et sur chacun desquels sont produits respectivement des signaux numériques suivant une constellation en série représentatifs du signal de chrominance ($D_R$, $D_B$) et du signal de luminance ($E'_Y$).

13. Système selon la revendication 12, caractérisé en ce que l'unité de multiplexage (80) est asservie par un signal d'horloge haute fréquence provenant de la borne (55) du dispositif émetteur.

0123583

**Fig.1**

Fig. 2

FIG 3

0123583

Fig. 4

Fig. 5

Fig. 6

Office européen
des brevets

**RAPPORT DE RECHERCHE EUROPEENNE**

Numéro de la demande

EP 84 40 0576

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 424 860 (DELVAUX) <br> * Colonne 4, lignes 47-73 * <br><br> --- | 1 | H 04 N 9/40 |
| A | L'ONDE ELECTRIQUE, vol. 47, no. 486, septembre 1967, pages 1094-1110, Paris, FR; J. FAGOT: "Optimalisation des paramètres du système de télévision en couleur SECAM" <br> * Page 1095, colonne de gauche, ligne 18 - page 1096, colonne de gauche, ligne 25 * <br><br> ----- | 1 | |

DOMAINES TECHNIQUES RECHERCHES (Int. Cl. ³)

H 04 N

Le présent rapport de recherche a été établi pour toutes les revendications

| Lieu de la recherche | Date d'achèvement de la recherche | Examinateur |
|---|---|---|
| LA HAYE | 03-07-1984 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82